Europäisches Patentamt

European Patent Office

Office européen des brevets

(11) Veröffentlichungsnummer: **0 008 700**
**A1**

(12) **EUROPÄISCHE PATENTANMELDUNG**

(21) Anmeldenummer: **79102913.5**

(22) Anmeldetag: **10.08.79**

(51) Int. Cl.³: **G 01 N 25/18**
**A 47 J 31/58**

(30) Priorität: **07.09.78 DE 2839062**

(43) Veröffentlichungstag der Anmeldung:
**19.03.80 Patentblatt 80/6**

(84) Benannte Vertragsstaaten:
**AT CH FR GB IT**

(71) Anmelder: **SIEMENS AKTIENGESELLSCHAFT Berlin
und München**
**Postfach 261**
**D-8000 München 22(DE)**

(72) Erfinder: **Kleinschmidt, Peter, Dipl.-Phys**
**Klagenfurter Strasse 12**
**D-8000 München 90(DE)**

(72) Erfinder: **Meixner, Hans, Dr.**
**Max-Planck-Strasse 5**
**D-8013 Haar(DE)**

(72) Erfinder: **Magori, Valentin, Dipl.-Phys**
**Limburgstrasse 17**
**D-8000 München 90(DE)**

(54) **Elektronische Verkalkungsanzeige für Kaltleiter-beheizte Durchlauferhitzer.**

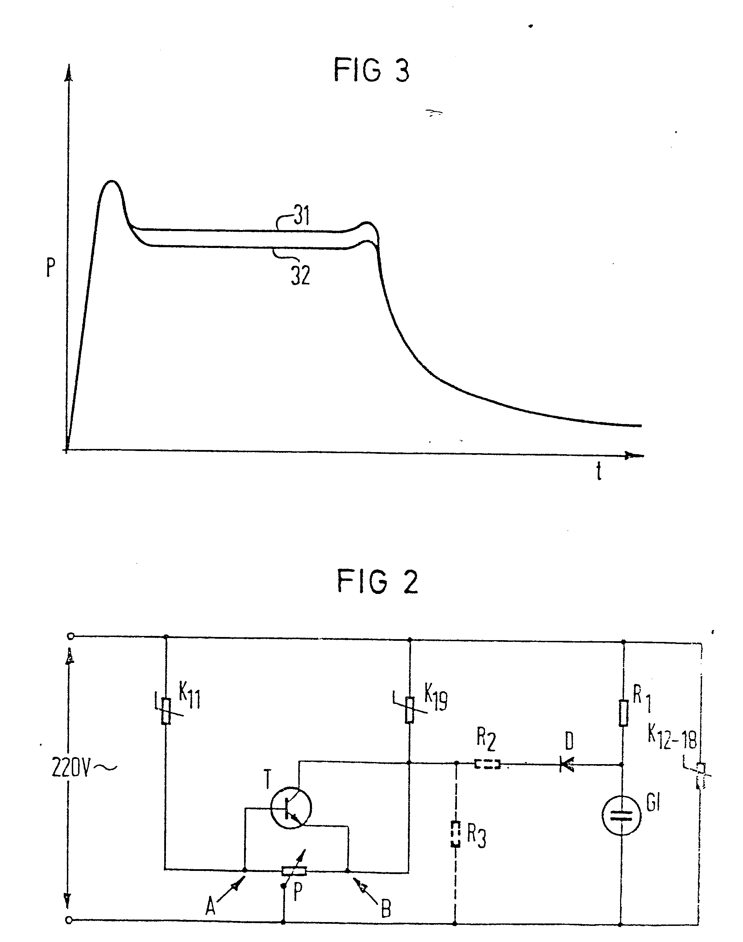

(57) Anzeigevorrichtung (Fig. 2) zur Anzeige, daß der Kaltleiter-beheizte (11-19) Durchlauferhitzer (1) entkalkt werden muß. Das Anzeigesignal wird aus einem mit zunehmender Verkalkung entstehenden Unterschied der Heizströme (111, 191; $K_{11}$ $K_{19}$) des Einlauf- und des Auslaufbereiches abgeleitet.

EP 0 008 700 A1

0008700

SIEMENS AKTIENGESELLSCHAFT     Unser Zeichen
Berlin und München            VPA 78 P 7 1 1 2

Elektronische Verkalkungsanzeige für Kaltleiter-beheizte
Durchlauferhitzer.

Die Erfindung bezieht sich auf eine elektronische Verkalkungsanzeige, wie sie im Oberbegriff des Patentanspruches 1 angegeben ist.

Ein wesentliches Problem bei Durchlauferhitzern, insbesondere bei solchen mit Verdampfung des Wassers, ist
ihre Verkalkung und damit Behinderung ihrer Betriebsweise.
Es besteht zwar grundsätzlich die Möglichkeit, das einem
Durchlauferhitzer zuzuführende Wasser in wie bekannter
Weise zu entkalken, jedoch sind nicht überall derartige
Einrichtungen installiert. Insbesondere gilt dies für
die weitverbreitete Verwendung von Kaffeemaschinen.

In zunehmendem Maße ist für Durchlauferhitzer mit einer
elektrischen Leistung in der Größenordnung von 500 Watt
die Verwendung von Kaltleiter-Heizelementen (auch als
keramische PTC-Widerstandselemente auf der Basis des Bariumtitanats bekannt) vorgesehen, die einen an sich bekannten Selbstregelungseffekt haben, nämlich z.B. eine

Bts 1 Bla / 31.8.78

Flüssigkeit bis in den Bereich einer durch das die Curie-Temperatur des Kaltleiter-Materials vorgegebenen Temperatur aufzuheizen und dann durch ein materialbedingtes Herunterregeln der abgegebenen Heizleistung keinen wesentlichen weiteren Temperaturanstieg mehr eintreten zu lassen.

Es ist eine Aufgabe der vorliegenden Erfindung, eine elektronische Anzeige für eine eingetretene Verkalkung eines Kaltleiter-beheizten Durchlauferhitzers anzugeben.

Diese Aufgabe wird mit einer elektronischen Verkalkungs-anzeige nach den Merkmalen des Oberbegriffes des Patent-anspruches 1 erfindungsgemäß gelöst, wie dies im Kennzeichen des Patentanspruches 1 angegeben ist. Weitere Ausgestaltungen und Weiterbildungen der Erfindung gehen aus den Unteransprüchen hervor.

Für konventionelle Heizelemente mit Heizdrahtwicklungen sind Anzeigeeinrichtungen für übermäßige Verkalkung bekannt, die auf der bei einer solchen Verkalkung eintretenden drastischen Temperaturerhöhung im Heizkörper beruhen. Mit Hilfe einfacher Temperaturfühler im Heizkörper läßt sich somit bei solchen konventionellen Heizelementen die Überhitzung leicht feststellen und zu einem entsprechenden Signal auswerten, das anzeigt, daß das Gerät nunmehr dringend einer Entkalkung bedarf.

Bei einem Kaltleiter-Heizelement versagt jedoch diese technische Maßnahme vollständig, da infolge der erwähnten selbstregelnden Eigenschaft des Kaltleiter-Materials auch bei noch so großer Verkalkung keine wesentliche Temperaturerhöhung — und zwar auch nicht im eigentlichen Heizelement — auftritt, die zu einer sicheren Anzeige praktisch verwendbar wäre.

Die vorliegende Erfindung beruht auf einem vergleichsweise völlig anderen Prinzip und es ist hier der technische Umstand ausgenutzt, daß bei einem jeden Durchlauferhitzer, so z.B. auch bei einer Kaffeemaschine, der Bereich des Wasserauslaufs im Vergleich zum Bereich des Wassereinlaufs unterschiedlich stark verkalkt. Wegen der am Wasserauslauf stärkeren Verkalkung ist in diesem Bereich die Wärmeableitung aus dem Kaltleiter-Element geringer, und zwar bei einer, vergleichsweise zum weniger verkalkten Bereich des Wassereinlaufs, im wesentlichen gleich großen Heiztemperatur der Heizelemente in beiden Bereichen.

Im Regelfall wird eine Kaltleiter-Heizung für einen Durchlauferhitzer, z.B. für eine Kaffeemaschine, für die erforderlichen mehreren 100 Watt Heizleistung in mehrere einzelne Heizelemente aufgeteilt ausgeführt. Diese einzelnen Heizelemente sind parallel zueinander an die Stromversorgung angeschlossen. Für den Fall eines einzigen Kaltleiter-Körpers als Heizelement ist für die vorliegende Erfindung eine Aufteilung der Elektrodenfläche in Einzelelektroden vorzusehen. Zur Realisierung der Erfindung ist vorgesehen, daß wenigstens im Bereich des Wassereinlaufs und im Bereich des Wasserauslaufs des Erhitzers jeweils ein einzelnes Kaltleiter-Heizelement als körperlich getrenntes Plättchen oder wenigstens jeweils ein getrennter Elektrodenbereich auf einem Gesamtheizkörper vorgesehen ist. Zur elektronischen Auswertung werden die Stromstärken der in diese Anteile des Gesamtheizelementes fließenden elektrischen Ströme miteinander verglichen. Eine einen vorgegebenen Toleranzwert oder Schwellenwert übersteigende Differenz der Stromaufnahme bzw. über eine Benutzungsdauer eintretende Änderung der Differenz der Stromaufnahme wird als Auswertekriterium herangezogen.

Weitere Erläuterungen der Erfindung gehen aus der nachfolgenden, anhand der Figuren durchgeführten Beschreibung hervor.

Fig.1 zeigt eine Prinzipdarstellung zur Erfindung,

Fig.2 zeigt ein Schaltbild zur Erfindung und

Fig.3 zeigt ein die Grundlagen der Erfindung erläuterndes Diagramm.

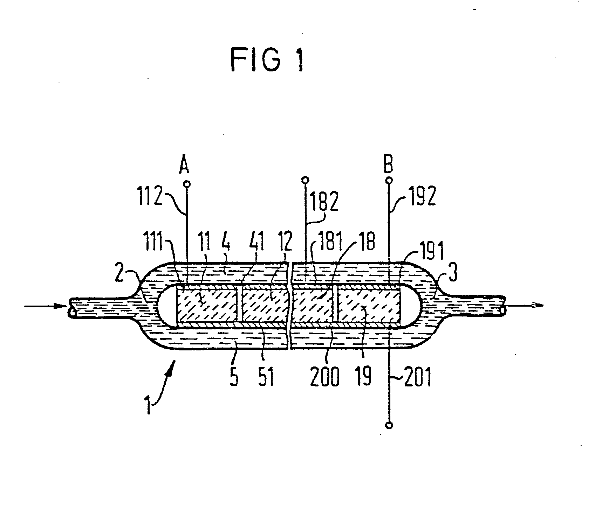

Fig.1 zeigt im Längsschnitt (und in der Längsausdehnung der Darstellung unterbrochen) einen Durchlauferhitzer 1 mit Wasserzulauf 2 und Wasserauslauf 3. Der in die Zweige 4 und 5 aufgeteilte Wasserlauf im eigentlichen Erhitzer verläuft über Wärmekontaktflächen 41 und 51, an die vom Inneren her (unter Zwischenlage von wärmeleitenden und elektrisch isolierenden, Wärmeausdehnung kompensierenden Schichten oder Folien) einzelne, vorzugsweise plättchenförmige Kaltleiter-Heizelemente an, von denen vier Heizelemente 11, 12, 18 und 19 dargestellt sind. Die Anzahl der in der Darstellung im Mittelbereich weggelassenen Elemente richtet sich u.a. nach der geforderten Gesamtleistung. Einzelne Kaltleiter-Heizelemente, wie die Elemente 11 bis 19, sind u.a. deshalb zu bevorzugen, weil großflächige Heizelemente nicht nur aufwendiger herzustellen sind, sondern auch der Bruchgefahr infolge thermischer Spannungen in größerem Maße ausgesetzt sind. Prinzipiell können aber die Heizelemente 11 bis 19 auch eine einzige Scheibe sein, die dann einzelne Elektrodenbereiche haben, die einerseits den Heizelementen 11 und 19 und andererseits den übrigen Heizelementen, diese gegebenenfalls zusammengefaßt, entsprechen. Wie in Fig.1 prinzipiell dargestellt, läßt sich das Heizelement 11 im Bereich des
Wassereinlaufs über die mit 111 bezeichnete Elektrode
und deren Anschlußleitung 112 mit elektrischem Strom speisen. Entsprechendes gilt für die Elektrode 191 und Anschlußleitung 192 des Heizelementes 19. Mit 181,182 ist
eine gegebenenfalls durchgehende Elektrode bzw. miteinander verbundene Elektroden der Heizelemente 12 bis 18
bezeichnet. Die Gegenelektrode kann als gemeinsame
Elektrode 200 mit entsprechender Anschlußleitung 201 ausgeführt sein.

Fig.2 zeigt nun eine das Prinzip der Erfindung nutzende
Schaltungsanordnung zur Feststellung sich verändernder
unterschiedlicher Stromaufnahme, und zwar für die hier
mit K11 und K19 bezeichneten elektrischen Widerstände
der Heizelemente 11 und 19 im Bereich des Wasssereinlaufs bzw. Wasserauslaufs. Die Widerstände der weiteren Heizelemente 12 bis 18 sind mit $K_{12-18}$ bezeichnet.

Im Prinzip bedarf die Schaltung der Fig.2 keiner weiteren Erläuterung für den Fachmann. Mit P ist ein Potentiometer bezeichnet, das zum Abgleich anfangs vorhandener Potentialunterschiede bei noch nicht verkalktem
Zustand, d.h. zum Abgleich der Potentiale unterschiedlicher Stromstärken in den Widerständen K11 und K19
dient. Solche abzugleichenden Potentialunterschiede
beruhen z.B. auf Exemplarstreuungen. Mit dem Transistor T werden die Potentiale der Punkte A und B, das
sind die festen Anschlüsse des Potentiometers P, miteinander verglichen. Aufgrund einer im Lauf der Benutzungsdauer immer stärker werdenden Verkalkung im
Bereich des Wasserauslaufs, d.h. im Bereich des Heizelementes 19 und damit für den Widerstand K19, ergibt sich eine zunehmende Potentialdifferenz zwischen den Punkten A und B (nach dem oben erwähnten ursprünglichen Null-Abgleich am Potentiometerabgriff). Diese Potentialdifferenz am Basis-Emitter-Eingang des Transistors T führt zu einer Signalspannung, an dessen Kollektorausgang mit der über ein Widerstandsnetzwerk R2, R3 (zur Anpassung der Signalspannung an die Glimmlampe) eine Diode und einen Vorwiderstand R1 eine Glimmlampe Gl zum Aufleuchten gebracht wird. Mit 220 Volt ist die Netzspannung angegeben, die gegebenenfalls auch 110 Volt oder dergleichen betragen kann. Gegebenenfalls ist anstelle einer Glimmlampe Gl eine mit entsprechender Spannung noch betriebssicher arbeitende Anzeigevorrichtung zu verwenden. Eine solche Schaltung kann anstelle eines Transistors T (und der Diode D) auch mit einem Thyristor ausgerüstet sein.

Fig.3 zeigt ein Diagramm, das weitere Erläuterungen zum Prinzip der Erfindung gibt. Auf der Ordinate ist die Heizleistung P aufgetragen. Auf der Abszisse ist die Betriebszeit t angegeben und die mit 31 und 32 bezeichnenten Kurven geben typische Verläufe für die zeitabhängige Abgabe von Heizleistung an. Die Kurve 31 entspricht dabei einer nicht oder nur unwesentlich verkalkten Kaffeemaschine. Die Kurve 32 entspricht dem Heizleistungsverlauf derselben Kaffeemaschine im verkalkten Zustand. Die in der Fig.3 enthaltenen schriftlichen Hinweise weisen auf die jeweiligen Betriebszustände hin. Bei der Erfindung ist nun der Umstand ausgenutzt worden, daß für den Bereich des Wassereinlaufs, d.h. im Bereich des Heizelementes 11, im wesentlichen ein Verlauf entsprechend der Kurve 31 beibehalten bleibt, da dort auch über längere Benutzung nur eine geringe Verkalkung auftritt. Im Bereich des Wasserauslaufs, d.h. im Bereich des Heizelementes 19, dagegen tritt eine dazu relativ sehr viel stärkere Ver-

kalkung im Lauf der Benutzungsdauer des Gerätes auf,
so daß dort ein Übergang vom Zustand der Kurve 31 in
den Zustand der Kurve 32 erfolgt. Die sich aus der
zwischen den Kurven 31 und 32 ablesbaren Leistungsdifferenz ergebende Stromdifferenz führt zu dem bereits
erwähnten, im Lauf der Zeit entstehenden Potentialunterschied zwischen den Punkten A und B der Fig.2.

3 Patentansprüche
3 Figuren

Patentansprüche:

1. Elektronische Verkalkungsanzeige für einen Durchlauferhitzer oder dergleichen mit Schaltungselementen zur Feststellung einer durch zunehmende Verkalkung im Durchlauferhitzer entstandenen Zustandsänderung, g e - k e n n z e i c h n e t dadurch, daß für einen Kaltleiter-beheizten Durchlauferhitzer (1) mit einer Heizung (11 bis 19) die wenigstens für den Bereich seines Wassereinlaufs (11) und für den Bereich seines Wasserauslaufs (19) jeweils für sich galvanisch getrennte Stromzuführungen (111, 191) hat, eine Schaltung (Fig.2) vorgesehen ist, mit der eine relative Stromänderung in diesen Stromzuführungen (111, 191) für diese beiden Bereiche (11, 19) als Signalspannung (Potentialdifferenz A-B) für eine Anzeigeeinrichtung (G1) benutzt ist.

2. Elektronische Verkalkungsanzeige nach Anspruch 1, g e k e n n z e i c h n e t dadurch, daß die Stromzweige der beiden Stromzuführungen (111, 191) des Bereiches des Wassereinlaufs (11) und des Bereiches des Wasserauslaufs (19) an jeweils einen der festen Anschlüsse (A, B) eines Potentiometers (P) gehen, dessen verstellbarer Anschluß gemeinsamer elektrischer Anschluß für diese beiden Stromzweige ist, und daß die sich mit zunehmender Verkalkung einstellende Potentialdifferenz zwischen den festen Anschlüssen (A, B) des Potentiometers (P) die Signalspannung ist.

3. Elektronische Verkalkungsanzeige nach Anspruch 1 oder 2, g e k e n n z e i c h n e t dadurch, daß diese Signalspannung (Potentialdifferenz A-B) über einen Transistor (T) verstärkt einer Glimmlampe (G1) zur optischen Anzeige zugeführt ist.

FIG 1

## FIG 3

## FIG 2

### EUROPÄISCHER RECHERCHENBERICHT

EP 79 10 2913

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | G 01 N 25/18 A 47 S 31/58 |
| A | US - A - 3 333 470 (LE ROY M. FINGERSON) <br> * Insgesamt * <br> -- | 1 | |
| A | US - A - 4 003 038 (R.S. MEIJER) <br> * Insgesamt * <br> -- | 1 | |
| A | FR - A - 2 279 095 (A.C.E.C.) <br> * Insgesamt * <br> -- | 1 | RECHERCHIERTE SACHGEBIETE (Int Cl 3) <br><br> G 01 N 25/18 A 47 J 31/58 |
| A | DE - A - 2 704 146 (LICENTIA PA-TENTVERWALTUNGS-GmbH) <br> * Insgesamt * <br> -- | 1 | |
| A | FR - A - 2 310 563 (HAWKER SIDDE-LEY DYNAMICS LTD.) <br> * Insgesamt * <br> -- | 1 | |
| A | DE - A - 2 611 261 (BOSCH-SIEMENS) <br> * Insgesamt * <br> ---- | 1 | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 07-12-1979 | DUCHATELLIER |

EPA form 1503.1 06.78